# DEMANDE DE BREVET EUROPEEN

(11) **EP 2 372 868 A1**
(43) Date de publication de la demande: **05.10.2011**
(21) Numéro de dépôt: 11160621.6
(22) Date de dépôt: 31.03.2011
(51) Int. Cl.: H02J 7/14, B60R 16/023, B60R 16/03

(54) **Boîtier électrique pour véhicule automobile**

(30) Priorité: 31.03.2010 FR 1001321
(71) Demandeur: Valeo Etudes Electroniques, 94042 Créteil Cedex (FR)
(72) Inventeur: Klein, Patrick, 94220, CHARENTON LE PONT (FR)
(74) Mandataire: Pothmann, Karsten

(57) **Abrégé**

La présente invention concerne un boîtier électrique pour véhicule automobile configuré pour être alimenté par une batterie électrique (7) connectée à un générateur électrique (9), ledit boîtier comportant :
- une pluralité de fusibles (13), et
- un circuit de commande (15) pour piloter au moins une partie desdits fusibles (13) du boîtier électrique.

Selon l'invention, ledit boîtier comporte en outre au moins un moyen de traitement (25) pour déterminer si ladite batterie (7) est connectée audit générateur (9) ou déconnectée dudit générateur (9).

## Description

L'invention concerne un boîtier électrique pour véhicule automobile destiné à être alimenté par une batterie électrique du véhicule connectée à un générateur électrique.

Un tel boîtier électrique, également appelé boîtier de départ batterie, comporte généralement une pluralité de fusibles ou composants de protection contre les surtensions et/ou surintensités, et un circuit de distribution d'alimentation du véhicule, plus précisément de différents équipements du véhicule permettant de réaliser certaines fonctions du véhicule.

On peut citer par exemple des fonctions de confort telles que la gestion de la température à l'intérieur de l'habitacle ou encore des fonctions de base telles que le système de freinage. En pratique une fonction de confort est une fonction que l'on accepte ne plus voir assurée dans certains cas de dysfonctionnements, tandis qu'une fonction de base est une fonction essentielle pour le véhicule.

Le boîtier électrique comporte en outre un circuit de commande comportant généralement au moins un commutateur de puissance pour piloter une partie des fusibles ou composants de protection dans l'objectif de couper certains équipements alimentés en aval lorsque le véhicule est à l'arrêt, c'est à dire avec le moteur coupé.

L'invention a pour objectif de fournir un tel boîtier électrique à fusibles possédant des fonctions élargies.

À cet effet, l'invention a pour objet un boîtier électrique pour véhicule automobile configuré pour être alimenté par une batterie électrique connectée à un générateur électrique, ledit boîtier comportant une pluralité de fusibles, et un circuit de commande pour piloter au moins une partie desdits fusibles du boîtier électrique, caractérisé en ce que ledit boîtier comporte en outre au moins un moyen de traitement pour déterminer si ladite batterie est connectée audit générateur ou déconnectée dudit générateur.

Le boîtier électrique peut donc surveiller la connexion entre la batterie et le générateur en plus des fonctions classiques d'un boîtier dit de départ batterie.

Ledit boîtier électrique peut comporter en outre une ou plusieurs des caractéristiques suivantes, seules ou en combinaison :
- ledit au moins un moyen de traitement pour déterminer si ladite batterie est connectée audit générateur ou déconnectée dudit générateur comporte une chaine de traitement analogique et une chaine de traitement numérique,
- la chaine de traitement analogique comporte un détecteur de tension crête positive, un détecteur de tension crête négative, un moyen de détermination de la tension crête à crête à partir des tensions crête positive et négative détectées,
- le moyen de détermination est un amplificateur opérationnel selon une configuration d'amplificateur différentiel,
- la chaine de traitement analogique comporte en outre un filtre passe-bande de la tension périodique générée par ledit générateur,
- la chaine de traitement analogique comporte un filtre passe-bas de la tension crête à crête déterminée,
- la chaine de traitement numérique comporte un convertisseur analogique / numérique pour convertir la tension crête à crête déterminée en une valeur numérique, un comparateur de la valeur numérique obtenue à un seuil prédéterminé, de façon à détecter lorsque ladite valeur numérique est supérieure au seuil prédéterminé et donc que la batterie est déconnectée du boîtier électrique, et un filtre du résultat de comparaison sur une durée prédéfinie,
- le circuit de commande comporte un micro-contrôleur pour piloter au moins une partie desdits fusibles configuré pour assurer la fonction dudit comparateur,
- le circuit de commande comporte un micro-contrôleur pour piloter au moins une partie desdits fusibles configuré pour assurer la fonction dudit filtre,
- le circuit de commande est configuré pour informer un calculateur à travers un réseau multiplexé de la connexion ou non de la batterie au générateur électrique du véhicule.

D'autres caractéristiques et avantages de l'invention ressortiront de la description suivante, donnée à titre d'exemple, sans caractère limitatif, en regard des dessins annexés sur lesquels :
- la figure 1 illustre de façon schématique un boîtier électrique selon l'invention et un bloc d'alimentation dudit boîtier,
- la figure 2 est une vue en perspective du boîtier électrique de la figure 1,
- la figure 3 est une représentation schématique de moyens de traitement pour déterminer l'état de connexion entre la batterie et un générateur du bloc d'alimentation de la figure 1,
- la figure 4 illustre un exemple de réalisation de chaine de traitement analogique pour déterminer une tension crête à crête à partir de la tension générée par le générateur.

Sur ces figures et dans la suite de la description, les éléments identiques sont identifiés par les mêmes numéros de référence.

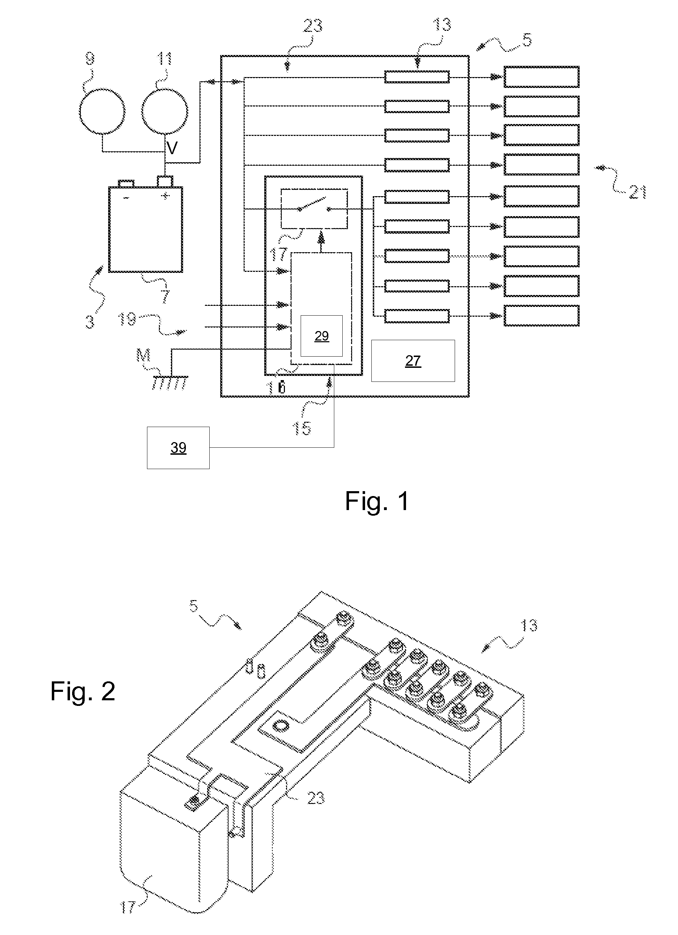

Sur la figure 1, on a représenté un bloc d'alimentation 3, et un boîtier électrique 5, dit de départ batterie mieux visible sur la figure 2.

En référence à la figure 1, le bloc d'alimentation 3 comporte une batterie 7 ayant une borne de polarité positive (+) et une borne de polarité négative (-). Cette batterie 7 est reliée par sa borne positive (+) d'une part à un générateur électrique, ici un alternateur 9 et d'autre part au démarreur 11 du véhicule.

Le boîtier 5 est connecté à la batterie 7, par exemple à la borne positive (+) de la batterie 7.

En outre, le boîtier 5 comporte :
- une pluralité de fusibles 13 ou composants de protection contre les surtensions et/ou surintensités, et
- un circuit de commande 15 de fonctions électriques du véhicule, comportant un micro-contrôleur 16 et un commutateur de puissance 17 commandé par le micro-contrôleur 16 pour piloter les fusibles 13.

Ce circuit 15 reçoit d'une part des entrées de commande 19 provenant d'un organe de commande (non représenté) manipulable par un utilisateur du véhicule et commande l'exécution des fonctions électriques 21 correspondantes.

On peut citer comme exemple de fonction électrique 21 exécutée, la mise sous tension de certains équipements du véhicule, en fonction de la position de la clé de contact manipulée par l'utilisateur.

Ce circuit 15 est de plus relié à une masse M du véhicule.

Le boîtier 5 présente en outre un circuit de distribution d'alimentation sur lequel sont connectés les composants du circuit de commande 15 et la pluralité de fusibles 13. Ce circuit comporte une plage conductrice 23 destinée à être connectée à la batterie 7.

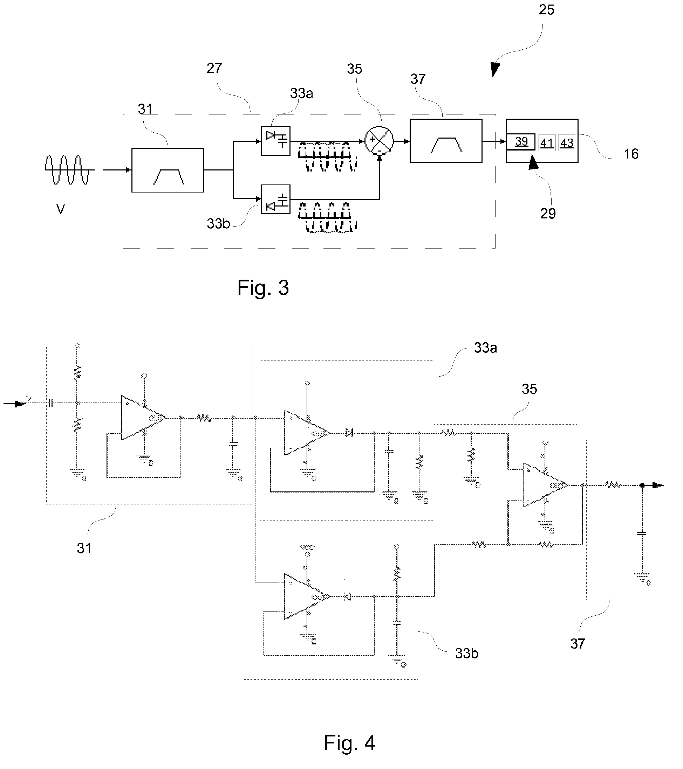

Le boîtier 5 comporte en outre des moyens de traitement 25 (figure 3) pour déterminer si la connexion entre la batterie 7 et l'alternateur 9 est établie ou non.

Ces moyens de traitement 25 comprennent une chaine de traitement analogique 27 comprenant des composants électriques et/ou électroniques pour déterminer la tension crête à crête de la composante alternative du signal de sortie V de l'alternateur 9, et une chaine de traitement numérique 29 pour vérifier à partir de cette tension crête à crête, la connexion ou la déconnexion entre la batterie 7 et l'alternateur 9.

Plus précisément, la chaine de traitement analogique 27 dont un exemple de réalisation est également illustrée sur la figure 4, peut comporter :
- un filtre passe-bande 31 pour supprimer les perturbations hautes fréquences et basses fréquences ainsi que la composante continue du signal V de l'alternateur 9 de sorte qu'il ne reste que la composante alternative; ce filtre passe-bande 31 comporte de façon connue un amplificateur opérationnel, trois résistances et deux condensateurs,
- un détecteur 33a de tension crête positive à partir de la tension alternative générée par l'alternateur 9; ce détecteur 33a est formé d'un amplificateur opérationnel, d'une diode, d'un condensateur et d'une résistance,
- un détecteur 33b de tension crête négative à partir de la tension alternative générée par l'alternateur 9; dans ce cas le détecteur 33b est formé d'un amplificateur opérationnel, d'une diode montée en inverse, d'un condensateur et d'une résistance,
- un moyen de détermination 35, par exemple un amplificateur différentiel, pour déterminer la tension crête à crête à partir des tensions crête positive et négative détectées par les détecteurs 33a et 33b, et
- un filtre passe-bas 37, formé par une résistance et un condensateur en série, pour supprimer les valeurs transitoires de la tension crête à crête avant de fournir le signal en entrée de la chaine de traitement numérique 29.

La chaine de traitement numérique 29 comporte quant à elle :
- un convertisseur analogique / numérique 39 permettant de convertir la tension crête à crête en une valeur numérique,
- un comparateur 41 de cette valeur numérique avec un seuil prédéterminé, et
- un filtre 43 du résultat de comparaison sur une durée prédéfinie.

Ces fonctions de comparateur 41 et de filtre 43 sont assurées par le micro-contrôleur 16 du circuit de commande 15 pilotant des fusibles 13 et du logiciel associé.

On peut prévoir également que la fonction de convertisseur 39 soit assurée par le micro-contrôleur 16.

Ainsi, si sur une certaine durée prédéfinie, la valeur numérique atteint ou est supérieure au seuil prédéterminé, le micro-contrôleur 16 détermine que la batterie 7 est déconnectée de l'alternateur 9.

Dans le cas contraire, le micro-contrôleur 16 détermine que la batterie 7 est connectée à l'alternateur 9.

En effet, lorsque la connexion est bien établie entre la batterie 7 et l'alternateur 9, la tension d'ondulation générée par l'alternateur 9 est petite car la batterie 7 agissant comme une capacité permet de lisser le signal. En revanche, lorsque la batterie 7 est déconnectée de l'alternateur 9, la tension d'ondulation générée augmente car la batterie 7 n'exerce plus de lissage.

L'information sur la connexion entre la batterie 7 et l'alternateur 9 est remontée à un calculateur 39 du véhicule représenté de façon schématique sur la figure 1, via une liaison multiplexée telle qu'un bus LIN.

Une information d'alerte peut alors être transmise au conducteur. En complément ou en variante, on peut prévoir un délestage de certaines fonctions de confort du véhicule automobile en cas de détection de la déconnexion entre la batterie 7 et l'alternateur 9.

## Revendications

1. Boîtier électrique pour véhicule automobile configuré pour être alimenté par une batterie électrique (7) connectée à un générateur électrique (9), ledit boîtier comportant :
- une pluralité de fusibles (13), et
- un circuit de commande (15) pour piloter au moins une partie desdits fusibles (13) du boîtier électrique,
**caractérisé en ce que** ledit boîtier comporte en outre au moins un moyen de traitement (25) pour déterminer si ladite batterie (7) est connectée audit générateur (9) ou déconnectée dudit générateur (9).

2. Boîtier électrique selon la revendication 1, **caractérisé en ce que** ledit au moins un moyen de traitement (25) pour déterminer si ladite batterie (7) est connectée audit générateur (9) ou déconnectée dudit générateur (9) comporte :
- une chaine de traitement analogique (27), et
- une chaine de traitement numérique (29).

3. Boîtier électrique selon la revendication 2, la chaine de traitement analogique (27) comporte :
- un détecteur (33a) de tension crête positive,
- un détecteur (33b) de tension crête négative,
- un moyen de détermination (35) de la tension crête à crête à partir des tensions crête positive et négative détectées.

4. Boîtier électrique selon la revendication 3, **caractérisé en ce que** le moyen de détermination (35) est un amplificateur opérationnel selon une configuration d'amplificateur différentiel.

5. Boîtier électrique selon l'une quelconque des revendications 2 à 4, **caractérisé en ce que** la chaine de traitement analogique (27) comporte en outre un filtre passe-bande (31) de la tension périodique générée par ledit générateur (9).

6. Boîtier électrique selon l'une quelconque des revendications 2 à 5, **caractérisé en ce que** la chaine de traitement analogique (27) comporte un filtre passe-bas (37) de la tension crête à crête déterminée.

7. Boîtier électrique selon l'une quelconque des revendications 2 à 6, **caractérisé en ce que** la chaine de traitement numérique (29) comporte :
- un convertisseur analogique / numérique (39) pour convertir la tension crête à crête déterminée en une valeur numérique,
- un comparateur (41) de la valeur numérique obtenue à un seuil prédéterminé, de façon à détecter lorsque ladite valeur numérique est supérieure au seuil prédéterminé et donc que la batterie est déconnectée du boîtier électrique, et
- un filtre (43) du résultat de comparaison sur une durée prédéfinie.

8. Boîtier électrique selon la revendication 7, **caractérisé en ce que** le circuit de commande (15) comporte un micro-contrôleur (16) pour piloter au moins une partie desdits fusibles (13) configuré pour assurer la fonction dudit comparateur (41).

9. Boîtier électrique selon l'une des revendications 7 ou 8, **caractérisé en ce que** le circuit de commande (15) comporte un micro-contrôleur (16) pour piloter au moins une partie desdits fusibles (13) configuré pour assurer la fonction dudit filtre (43).

10. Boîtier électrique selon l'une quelconque des revendications précédentes, **caractérisé en ce que** le circuit de commande (15) est configuré pour informer un calculateur (39) à travers un réseau multiplexé de la connexion ou non de la batterie au générateur (9) électrique du véhicule.
